# EUROPEAN PATENT APPLICATION

(11) **EP 1 921 611 A2**
(43) Date of publication of application: **14.05.2008**
(21) Application number: 07252787.2
(22) Date of filing: 12.07.2007
(51) Int. Cl.: G11B 5/31, G11B 5/127

(54) **Magnetic write head employing multiple magnetomotive force (MMF) sources**

(30) Priority: 13.11.2006 US 598419
(71) Applicant: Hitachi Global Storage Technologies Netherlands B.V., 1076 AZ Amsterdam (NL)
(72) Inventor: Lengsfield, Byron Hassbert III, Gilroy, CA 95020 (US); McFadyen, Ian Robson, San Jose, CA 95120 (US); Nix, James L., Gilroy, CA 95020 (US); Olson, James Terrence, Santa Cruz, CA 95062 (US); van der Heijden, Petrus Antonius, San Jose, CA 95135 (US); Wilson, Bruce, San Jose, CA 95119 (US)
(74) Representative: Calderbank, Thomas Roger

(57) **Abstract**

A write head for perpendicular magnetic recording having a write pole and first and second return poles. The write head can include a first magnetomotive force source for delivering a magnetomotive force to the first return pole and the write pole and a second magnetomotive force source for delivering magnetomotive force to the second return pole and the write pole. The first and second magnetomotive force sources can be operated independently of one another so that different relative amounts of magnetomotive force can be applied to the first and second return poles. A trailing magnetic shield can be connected with one of the return poles, such as the second return poles, and the variation in magnetomotive force can be used to increase the amount of flux flowing through the trailing shield when increased field gradient is desired (such as when writing a transistion), and to decrease the amount of flux through the trailing shield when decreased field gradient and increased write field are desired (such as when writing a long magnetic section on a magnetic medium).

## Description

The present invention relates to magnetic data recording, and more particularly to a magnetic write head having a dynamically changeable write field produced by multiple MMF sources.

The heart of a computer's long term memory is an assembly that is referred to as a magnetic disk drive. The magnetic disk drive includes a rotating magnetic disk, write and read heads that are suspended by a suspension arm adjacent to a surface of the rotating magnetic disk and an actuator that swings the suspension arm to place the read and write heads over selected circular tracks on the rotating disk. The read and write heads are directly located on a slider that has an air bearing surface (ABS). The suspension arm biases the slider toward the surface of the disk, and when the disk rotates, air adjacent to the disk moves along with the surface of the disk. The slider flies over the surface of the disk on a cushion of this moving air. When the slider rides on the air bearing, the write and read heads are employed for writing magnetic transitions to and reading magnetic transitions from the rotating disk. The read and write heads are connected to processing circuitry that operates according to a computer program to implement the writing and reading functions.

The write head traditionally includes a coil layer embedded in one or more insulation layers (insulation stack), the insulation stack being sandwiched between first and second pole piece layers. A gap is formed between the first and second pole piece layers by a gap layer at an air bearing surface (ABS) of the write head and the pole piece layers are connected at a back gap. Current conducted to the coil layer induces a magnetic flux in the pole pieces which causes a magnetic field to fringe out at a write gap at the ABS for the purpose of writing the aforementioned magnetic transitions in tracks on the moving media, such as in circular tracks on the aforementioned rotating disk.

In current read head designs a spin valve sensor, also referred to as a giant magnetoresistive (GMR) sensor has been employed for sensing magnetic fields from the rotating magnetic disk. A GMR sensor includes a nonmagnetic conductive layer, referred to as a spacer layer, sandwiched between first and second ferromagnetic layers, referred to as a pinned layer and a free layer. First and second leads are connected to the spin valve sensor for conducting a sense current therethrough. The magnetization of the pinned layer is pinned perpendicular to the air bearing surface (ABS) and the magnetic moment of the free layer is located parallel to the ABS, but free to rotate in response to external magnetic fields. The magnetization of the pinned layer is typically pinned by exchange coupling with an antiferromagnetic layer.

The thickness of the spacer layer is chosen to be less than the mean free path of conduction electrons through the sensor. With this arrangement, a portion of the conduction electrons is scattered by the interfaces of the spacer layer with each of the pinned and free layers. When the magnetizations of the pinned and free layers are parallel with respect to one another, scattering is minimal and when the magnetizations of the pinned and free layer are antiparallel, scattering is maximized. Changes in scattering alter the resistance of the spin valve sensor in proportion to cos 0, where 0 is the angle between the magnetizations of the pinned and free layers. In a read mode the resistance of the spin valve sensor changes proportionally to the magnitudes of the magnetic fields from the rotating disk. When a sense current is conducted through the spin valve sensor, resistance changes cause potential changes that are detected and processed as playback signals.

In order to meet the ever increasing demand for improved data rate and data capacity, researchers have been focusing on developing perpendicular magnetic recording systems. A perpendicular magnetic write head includes a magnetic write pole and a return pole, the write pole and return pole being magnetically connected at location removed from the write gap. A write field from the write pole writes a magnetic bit onto a magnetic medium in a direction generally perpendicular to the magnetic medium.

The design of perpendicular magnetic write heads has been limited by the need to strike a balance between conflicting needs. For example, it is desired that the largest possible write field be produced in order to effectively magnetize the magnetically coercive top layer of the media A write field can more effectively write a magnetic bit to a medium when the write field is canted at an angle rather than being perfectly perpendicular to the medium. This canting angle can be achieved by drawing a certain amount of magnetic flux into a trailing shield. Unfortunately, this means that a certain amount of the write field is lost to the trailing shield. Therefore, as more flux is drawin to the trailing shield, the effective writing capability of the write head at first increases as the angle of the field increases, and then decreases as more and more field is lost to the trailing shield.

The need for a strong write field is especially important when writing a long magnetic section on a data track (ie. the section of track is magnetized in one direction with a long spacing between transitions). Such a long magnetic section of write track can be referred to as a long magnet. These long magnets generate strong demagnetization (demag) fields that can demagnetize the long magnet, which is why a strong write field and higher coercivity media are needed. When writing long magnet, the field in the gap should not be strong if it takes the opposite polarity to the field under the write pole. That is, there should not be a large field "undershoot" in the gap between the write pole and the trailing pole.

Therefore, magnetic write heads have been designed to strike a balance between the mutually conflicting needs for a strong perpendicular write field and reduced undershoot when writing long magnetic sections of data track and the need for high field gradient at transitions. There remains a need for a write pole design that can overcome the limitations of these mutually conflicting needs.

The present invention provides a magnetic write head for perpendicular magnetic recording. The head includes a write pole and first and second return poles. A first magnetomotive force source (first MMF source) provides a magnetomotive force to induce a magnetic flux in the first return pole and in the write pole. A second magnetomotive force source (second MMF source) provides a magnetomotive force to induce a magnetic flux in the second return pole and in the write pole. The first and second MMF sources can be controlled independently of one another so that the amount of flux through one of the return poles can vary with respect to the other.

The invention can be used to control the amount of magnetic flux flowing through a trailing magnetic shield connected with one of the return poles, such as the second return pole. The trailing shield can provide increased write field gradient at the expense of write field strength. This can be desirable when a magnetic transition is to be written. At locations between magnetic transitions, when the write head is writing a long magnetic section on the disk, it is desirable that write field be maximized and field gradient is not as important.

The multiple MMF sources of the present invention advantageously allow the write head to provide the desired increased magnetic field gradient at a transition while also allowing the head to maximize write field at long magnetic sections between transitions. By activating the MMF source adjacent to the return pole connected with the trailing shield (eg. the second MMF source), the magnetic flux through the trailing shield is increased, thereby increasing write field gradient. By decreasing the effect of this MMF source and relying primarily on the other MMF source, the write field is increased by decreasing the effect of the trailing shield.

The multiple MMF sources can also be used to control undershoot, and to compensate for the effects of manufacturing tolerances, as will be described in greater detail below. Therefore, it can be seen that the present invention provide greatly increased performance and flexibility.

These and other features and advantages of the invention will be apparent upon reading of the following detailed description of preferred embodiments taken in conjunction with the Figures in which like reference numerals indicate like elements throughout.

For a fuller understanding of the nature and advantages of this invention, as well as the preferred mode of use, reference should be made to the following detailed description read in conjunction with the accompanying drawings which are not to scale.
FIG. **1** is a schematic illustration of a disk drive system in which the invention might be embodied;
FIG. **2;** is an ABS view of a slider, taken from line **2-2** of FIG. **1,** illustrating the location of a magnetic head thereon;
FIG. **3** is a side cross sectional view taken from line **3-3** of Fig. **2** of a write head according to an embodiment of the invention in a first state of use;
Fig. **4** is a side cross sectional view of the write head illustrated in Fig. **3,** operated in a second state of use;
Fig. **5** is a schematic view of a write head according to an embodiment of the invention;
Fig. **6** is a schematic view of a write head according to an alternate embodiment of the invention;
Fig. **7** is a schematic view of a write head according to another embodiment of the invention;
Fig. **8** is a schematic view of a write head according to yet another embodiment of the invention; and
Fig. **9** is a side cross sectional view of a write head employing a helical coil and bias coil.

The following description is of the best embodiments presently contemplated for carrying out this invention. This description is made for the purpose of illustrating the general principles of this invention and is not meant to limit the inventive concepts claimed herein.

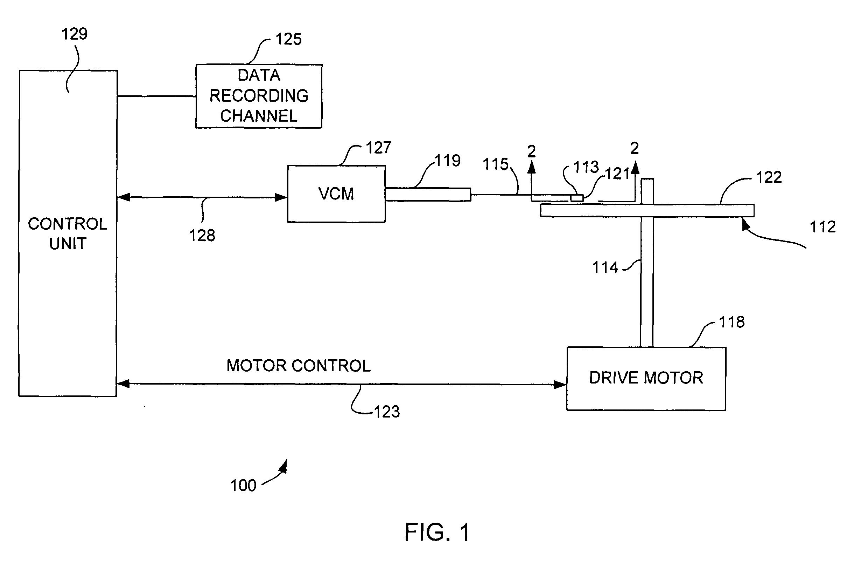

Referring now to FIG. **1,** there is shown a disk drive **100** embodying this invention. As shown in FIG. **1,** at least one rotatable magnetic disk **112** is supported on a spindle **114** and rotated by a disk drive motor **118.** The magnetic recording on each disk is in the form of annular patterns of concentric data tracks (not shown) on the magnetic disk **112.**

At least one slider **113** is positioned near the magnetic disk **112,** each slider **113** supporting one or more magnetic head assemblies **121.** As the magnetic disk rotates, slider **113** moves radially in and out over the disk surface **122** so that the magnetic head assembly **121** may access different tracks of the magnetic disk where desired data are written. Each slider **113** is attached to an actuator arm **119** by way of a suspension **115.** The suspension **115** provides a slight spring force which biases slider **113** against the disk surface **122.** Each actuator arm **119** is attached to an actuator means **127.** The actuator means **127** as shown in FIG. **1** may be a voice coil motor (VCM). The VCM comprises a coil movable within a fixed magnetic field, the direction and speed of the coil movements being controlled by the motor current signals supplied by controller **129.**

During operation of the disk storage system, the rotation of the magnetic disk **112** generates an air bearing between the slider **113** and the disk surface **122** which exerts an upward force or lift on the slider. The air bearing thus counter-balances the slight spring force of suspension **115** and supports the slider **113** off and slightly above the disk surface by a small, substantially constant spacing during normal operation.

The various components of the disk storage system are controlled in operation by control signals generated by control unit **129,** such as access control signals and internal clock signals. Typically, the control unit 129 comprises logic control circuits, storage means and a microprocessor. The control unit **129** generates control signals to control various system operations such as drive motor control signals on line **123** and head position and seek control signals on line **128.** The control signals on line **128** provide the desired current profiles to optimally move and position slider **113** to the desired data track on disk **112.** Write and read signals are communicated to and from write and read heads **121** by way of recording channel **125.**

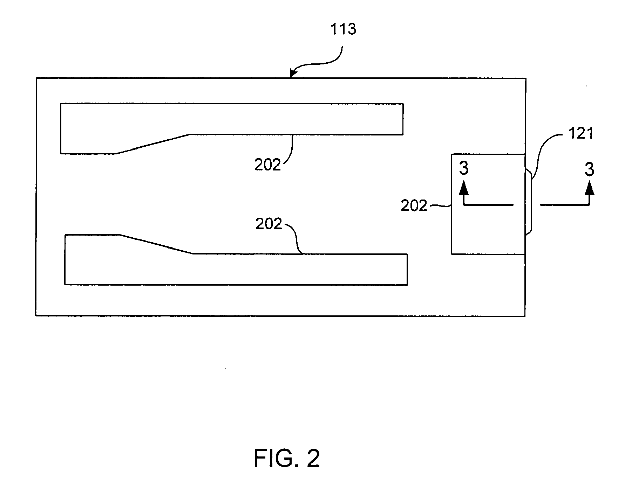

With reference to Fig. **2,** the orientation of the magnetic head **121** in a slider **113** can be seen in more detail. Figure **2** is an ABS view of the slider **113,** and as can be seen the magnetic head including an inductive write head and a read sensor, is located at a trailing edge of the slider. The above description of a typical magnetic disk storage system, and the accompanying illustration of FIG. **1** are for representation purposes only. It should be apparent that disk storage systems may contain a large number of disks and actuators, and each actuator may support a number of sliders.

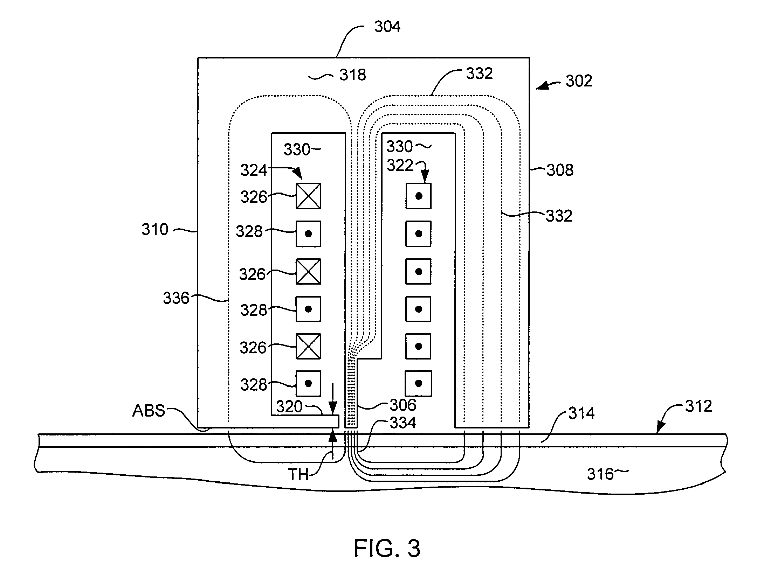

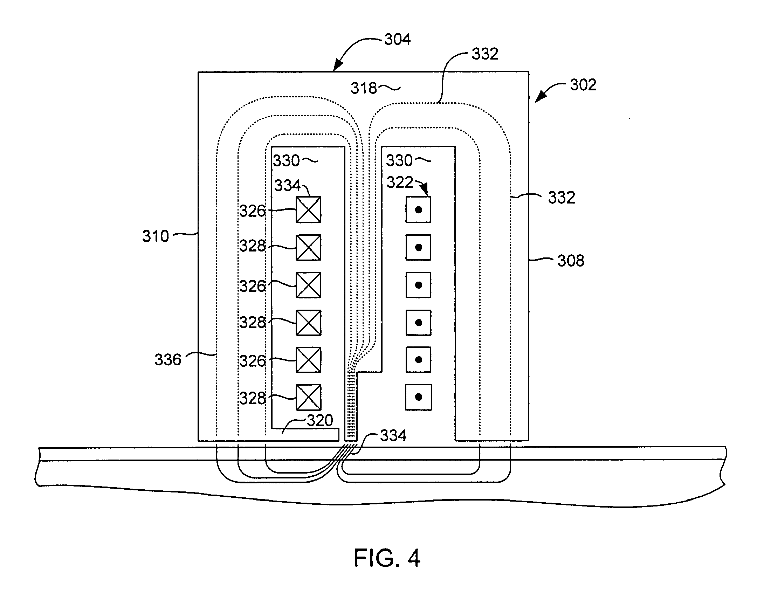

With reference now to Figs. **3** and **4,** a magnetic write head **302** for use in perpendicular magnetic recording is shown. The write head **302** includes a yoke **304** that includes a write pole **306,** a first or leading return pole **308** and a second or trailing return pole **310**. The poles **306, 308, 310** extend toward an air bearing surface (ABS). The ABS faces a magnetic medium **312** that preferably includes a thin high coercivity top magnetic layer **314** and a lower coercivity magnetic underlayer **316.**

The write pole **306,** leading return pole **308** and trailing return pole **310** are magnetically connected at a back gap area **318** located away from the ABS. A magnetic shield 320 can be connected with one of the first and second return poles **308, 310** and extends toward the write pole **306.** The shield **320** is preferably connected with the trailing return pole **310** and will be referred to hereafter as a trailing shield **320**. The trailing shield **320** is separated by a trailing gap having a thickness that is preferably in the order of about half of the distance between the tip of the write pole **306** and the soft underlayer **316** of the media **312.** The trailing shield also has a throat height TH that is measured as the thickness as measured from the ABS.

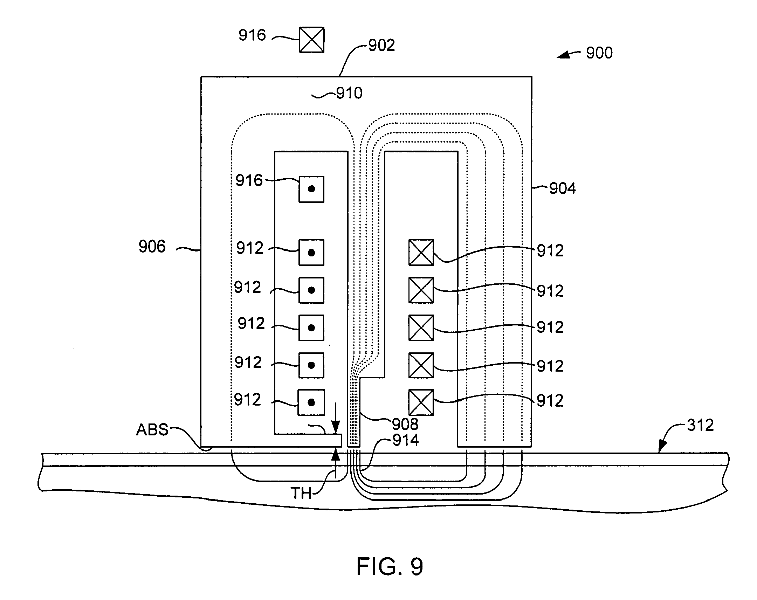

The write head **302** shown in Figs. **3** and **4** has a first coil **322** (first magnetomotive force (MMF) source), at least a portion of which passes between the write pole **306** and the first return pole **308.** The write coil **322** is shown in cross section in Figs. **3** and **4.** The coil **322** can be what is known as a pancake coil, which is formed on a plane perpendicular to the ABS or can be a helical coil such as that described below with reference to Fig. **9.**

The write head **302** also has a second magnetomotive force (MMF) source **324** that passes between the write pole **306** and second return pole **310.** The second MMF source **324** may be constructed as a single coil or as multiple coils. In the embodiment shown in Figs. **3** and **4,** the MMF source **324** includes first and second coils **326, 328** that can be interwoven as shown in Figs. **3** and **4** or can be located side by side between the write pole **306** and the second return pole **310.** The first and second MMF sources **322, 324** are embedded within an insulation layer **330** such as alumina or some other electrically insulating, non-magnetic material.

In the embodiment shown in Figs. **3** and **4,** the coils **326, 328** of the second MMF source are connected with circuitry (not shown in Figs. **3** and **4**) that allows the coils **326, 328** to be energized such that current flows in opposite directions in the coils **326, 328** as shown in Fig. **3,** or such that current flows in the same direction in both coils **326, 328** as shown in Fig. **4.** For purposes of illustration, an "x" is used in the Figures to denote a field that is directed into the page, while a circle with a dot in the middle is used to denote a field coming out of the page. As can be seen in Fig. **3,** when the coils **326, 328** are energized in opposite directions the magnetomotive forces from each of the coils **326, 328** cancel one another out so that there is little or no MMF contribution from the second MMF source **324.** The first MMF source **322** creates an MMF that causes a predominant amount of magnetic flux **332** to flow through the first return pole **308** rather than the second return pole **310.** This allows the magnetic write field **334** to emit from the write pole **306** in a substantially perpendicular orientation (ie. perpendicular to the surface of the media **312**). As mentioned above, this is advantageous when a strong perpendicular magnetic write field is needed, such as when writing long magnetic sections on the media **312.** Reducing the amount of flux flowing through the second return pole 310 also reduces undershoot, such reduction of undershoot being desirable when writing long magnetic sections.

With reference to Fig. **4,** when increased write field gradient is needed such as when recording a magnetic transition, electrical current in the coils **326, 328** can be made to flow in the same direction creating a MMF that causes a desired, larger amount of magnetic flux **336** to flow through the second return pole **310.** By increasing the flux to the second (or trailing) pole **310** the trailing shield **320** is activated. The activation of the trailing shield **320** attracts write field **334,** causing the write field to be canted as shown in Fig. **4,** and also increases the field gradient. In this manner the write field **334** can be canted at an angle of, for example, 45 degrees with respect to normal (relative to the surface of the magnetic media **312**). Activation of the trailing shield **320** improves write field gradient allowing faster switching of magnetization when writing a magnetic transition to the media **312.**

Therefore, there is a tradeoff at work. The tradeoff is between write field gradient and maximum write field. The write field gradient can be improved by the presence of a trailing shield due to increased write field angle. A significant fraction of the flux passing from the write pole **306** to the trailing return pole **310** does not pass through the recording medium at all. Instead it is shunted directly across the gap between the write pole and the trailing shield **320.** The leading return pole **308,** on the other hand, is sufficiently far from the write pole that very little flux is shunted directly from the write pole to this return pole **308.** Flux to the leading return pole **308** reaches the leading return pole via the medium, by passing through the soft underlayer **316** of the medium **312.** The flux that does not pass through the medium does not contribute to the write field. Driving more flux through the trailing pole produces a stronger field gradient and a larger undershoot, provided that the trailing shield is not magnetically saturated. For maximum efficiency and maximum write field magnitude it is desirable to drive most of the flux through the leading return pole **308.** However, for best field angle it is desirable to drive the flux through the trailing pole **310.**

Unfortunately, some head dimensions that critically influence this balance of flux between the trailing pole **310** and the leading pole **308** are difficult to control. For example, the trailing shield **320** is typically very thin (ie in the direction perpendicular to the ABS) and this thickness is greatly influenced by the mechanical lapping process used to define the air bearing surface. This lapping process is very difficult to control accurately, and therefore the thickness of the trailing shield **320** is also difficult to control accurately.

The present invention advantageously mitigates this tradeoff and also the manufacturing related difficulties in striking this fine balance. By providing an electrical scheme for controlling the balance of flux between the leading return pole and the trailing return pole it is possible to compensate for manufacturing tolerances in some of these critical dimensions. For example, if the trailing shield **320** were thinner than expected, causing less flux to flow through the trialing return pole **310,** it would be possible to increase the current in the coil or coils **334** driving flux through the trailing return pole **310.** Various mechanisms for controlling the balance of flux between trailing and leading return poles are described with reference to the various figures of this Detailed Description of the invention. Therefore, the above description of advantages of the invention apply, not only to Figures **3** and **4,** but also to the various other figures and to other embodiments not specifically described, but also falling within the scope of the claims.

It should be pointed out that the embodiment shown in Fig. **4** that completely cancels out the MMF effect of the MMF source **324** is for illustrative purposes only. Based on design needs this concept could be employed to alter the amount of flux flowing to the first and second return poles 308, **310** to any degree necessary. For example, the relative number of turns of coils **326, 328** or the amount of current flowing through each coil **326, 328** can be altered in any amount desired to create an MMF force that can cause any desired amount of flux **336** to flow through the second return pole **310.** In this way, the amount of flux **332, 336** can be split between the first and second return poles **308, 310** in any proportion desired. It should also be pointed out that the invention applies to the use of multiple MMF sources generally, not only to the configuration shown. Such multiple MMF sources can be used independently to vary the flow of magnetic flux through various portions of a write head. The MMF sources **322, 324** can be operated independently in the sense the relative strength and/or directions of the magnetomotive force from the each of the MMF sources can be varied relative to one another, even though the two MMF sources **322, 324** operate in a mutually cooperative manner to achieve a desired result.

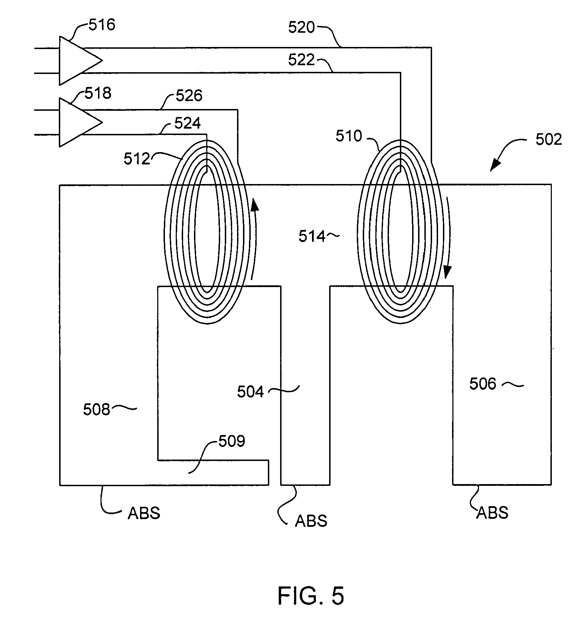

With reference now to Fig. **9,** in another embodiment of the invention, a write head **900** includes a yoke **902** having a first or leading return pole **904,** a second or trailing return pole **906** and a write pole **908** all of which are connected at a back gap **910** similar to the embodiment described in Figs. **4** and **5.** A trailing shield **907** can extend from the trailing return pole **906** toward the write pole **908.** The write head **900,** however, can employ a helical write coil **912** that wraps around the write pole. This write pole is a first magnetomotive force source (first MMF) source **912** that creates a write field **914.** A second MMF source **916** can be provided in the form of a bias coil **916** that wraps around the back gap **910.** The bias coil provides a magnetic field that can independently control the amount of flux flowing through the trailing return pole **906** and trailing shield **907.**

In addition, various other structures can be constructed to provide multiple MMF sources, all of which would fall within the scope of the invention. With reference now to Fig. **5,** according to one possible embodiment of the invention, a magnetic yoke **502** has a write pole **504** and first and second return poles **506, 508.** One of the return poles, such as the second return pole **508** may be connected with a trailing shield **509** as described above with reference to Fig. **4.** The write pole **504** and first and second return poles **506, 508** are magnetically connected by a back yoke portion or back gap portion **514** located away from an air bearing surface (ABS).

A first write coil (first MMF source) **510** provides a magnetomotive force to induce a magnetic flux between the write pole **504** and the first return pole **506.** A second write coil (second MMF source) **512** provides a magnetomotive force between the write pole **504** and the second return pole **508.** The coil **510** can be a pancake coil that wraps around the back gap portion **514** of the yoke as shown, or could be a helical coil that wraps around the return pole **506** (not shown). Similarly, the coil **512,** can be a pancake coil **512** that wraps around the back gap portion **514** as shown or can be a helical coil that wraps around the second return pole **508.**

As shown in Fig. **5,** current can be supplied to the coils **510, 512** by separate drivers **516, 518.** The first driver **516** can be a current or voltage source that connects with first and second leads **520, 522** of the coil **510.** Similarly, the second driver can also be a voltage or current source and connects with first and second leads **524, 526** of the second coil **512.** The first and second drivers **516, 512** can be operated independently so that the second coil **512** can provide a desired amount of magnetomotive force (MMF) that is different from that provided by the first coil **510.** The relative difference between the MMF provided by each of coils can be changed as desired in order to vary the amount of magnetic flux flowing through each of the return poles **506, 508** as described above with reference to Fig. **4.** Two examples of reasons that this might be desirable is to adjust for structural variations due to manufacturing tollerances and for improving write pole performance. These benefits will be discussed in greater detail herein below.

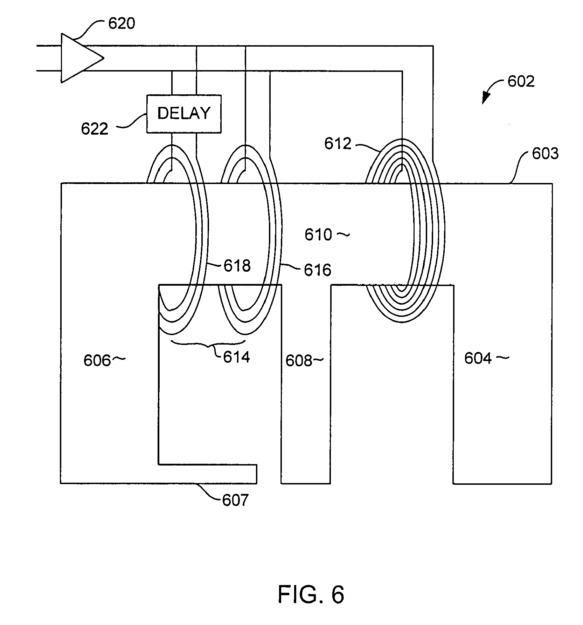

With reference now to Fig. **6,** according to another embodiment of the invention, a write head **602** includes a magnetic yoke **603** shown schematically having first and second return poles **604, 606** and a write pole **608,** the return poles **604, 606** and write poles **608** being magnetically connected at a back gap region **610** disposed away from the ABS. A trailing magnetic shield **607** may be provided to extend from the second return pole **606** toward the write pole **608.**

A first magnetomotive force source (MMF source) **612** is provided, at least a portion of which passes between the first return pole **604** and the write pole **608.** The first MMF source **612** can be in the form of an electrically conductive coil, which can be a pancake coil that wraps around the back gap portion **610** or a helical coil that wraps around the first return pole **604.** Other configurations for the first MMF source **604** could be possible as well.

A second MMF source **614** is provided, a portion of which passes between the second return pole **606** and the write pole **608.** In the presently described embodiment, the second MMF source can include a pair of coils **616, 618.** The first and second MMF sources **612, 614** can be driven by a common driver **620,** which can include a voltage source or a current source. One of the coils, for example the first coil **616** is connected to the driver **620** such that when current flows through the coils **612, 616,** the resulting magnetic field will be in the opposite direction such that the magnetic fields additively combine at the write pole **608.** The other coil of the second MMF source (for example the second coil **618**) can be connected to delay circuitry **622.** The coil **618** that is connected to the delay circuit can be connected to the driver such that current flows in a direction opposite to that of the other coil **616** when in steady state (after the delay has lapsed). The amount of delay provided by the delay circuit **622** is preferably about one bit period or less, although one bit period could be considered to be a maximum amount of delay. A delay of a fraction of a bit would be preferable. When a transition is being written, the driver **620** changes the current through the MMF sources **612, 614** from one direction to another. However, the delay circuit **622** delays this switching of the current to the second coil **618.** Therefore, although the coils **616, 618** are wired to have current flow in opposite directions, during the period of the delay the current through the coil **618** will not yet have switched and both coils will have current flowing in the same direction and will produce additive magnetic fields. In that case the coils **616, 618** combine to induce a magnetic flux through the second (or trailing) return pole and the trailing shield **607.**

After the desired amount of delay has passed, the delay circuit allows current to flow through the second coil **618** in a direction opposite to that of the first pole **616.** The resulting magnetic field cancels out the field from the first coil **616.** It should be pointed out that while the delay circuit can essentially turn the second MMF source **614** off and on, this need not be the case. The number of coil turns in each of the coils **616, 618** (or amount of current) can be varied so that the second MMF source can switch between higher and lower magnetic field states. For example, the first coil **616** of the second MMF source **614** could be configured with 4 turns while the second coil **618** is configured with just 2 turns. In that case, during a steady state the magnetic field from the second coil **618** would only partially cancel out the signal from the first coil **616** resulting in a low (non-zero) magnetic field from the second MMF source **614.** During the delay period the field from the coils **616, 618** would combine, resulting in a high magnetic field being emitted from the second MMF source **614.**

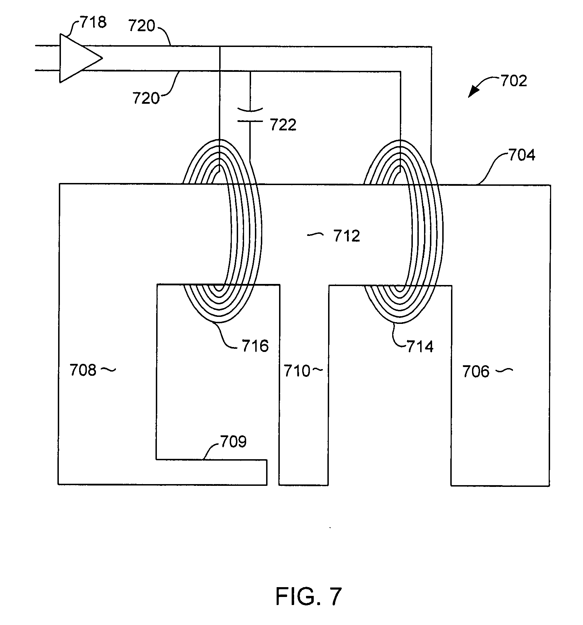

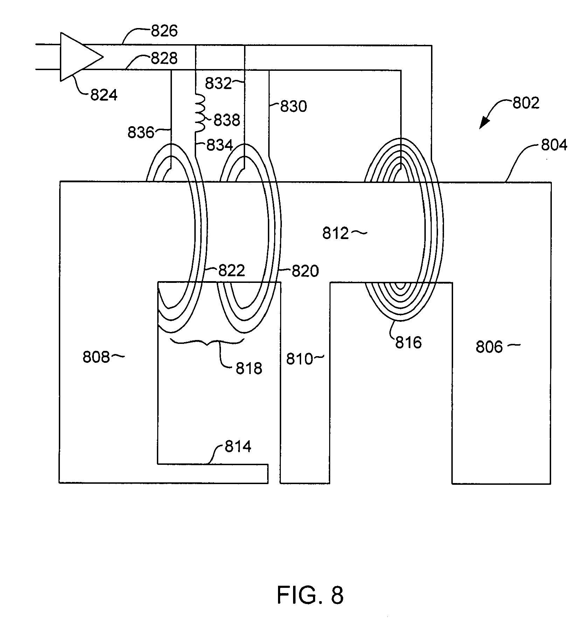

Figures **7** and **8** illustrate specific examples of structures and circuits that realize a delay such as that described above. With particular reference to Fig. **7,** a magnetic write head 702 according to an embodiment of the invention includes a magnetic yoke **704** having first and second magnetic return poles **706, 708** and a magnetic write pole **710** disposed between the return poles **706, 708.** A magnetic back gap area **712** magnetically connects the return poles **706, 708** and write pole **710** in a region away from the ABS. The second return pole **708** can be a trailing pole and can include a trailing magnetic shield **709** formed near the ABS that extends from the second return pole **708** toward (but not to) the write pole **710.** Various dimensions of the trailing shield **709** such as the throat height (thickness as measured from the ABS) and trailing gap (distance from the write pole **710**) can be carefully controlled to provide a desired amount of magnetic field canting for improved write field gradient while still providing sufficient write field strength and while preventing an undue amount of flux from leaking to the trailing shield **709.**

The write head includes a first MMF source **714** for producing a magnetic field to induce a magnetic flux through the first return pole and the write pole. As described above, the first MMF source can be a pancake coil that wraps around the back gap layer region **712** of the yoke **704** or can be a helical coil that wraps around the return pole **706.** The write head also includes a second MMF source **716.** As with the first MMF source **714,** the second MMF source **716** can be a pancake coil that wraps around the back gap portion **712** or could be a helical coil that wraps around the second return pole **708.** Other coil configurations could be possible as well. The first and second MMF sources **714, 716** can both be driven by a common driver **718,** which can be, for example, a voltage source, current source etc. The driver **718** is connected with the MMF sources by electrically conductive leads **720,** and one of the leads connected with the second MMF source **716** includes a capacitor **722** or circuitry that functions in a manner similar to a capacitor.

The capacitor **722** functions to activate the second MMF source **716** when a magnetic field from the second MMF source is desired and deactivate this second MMF source **716** when a magnetic field from the second MMF source is not desired. For example, when writing a magnetic transition, a magnetic field from the second MMF source is desired to increase the amount of magnetic flux flowing through the second return pole **708.** This increases the effect of the trailing shield **709,** causing the write field emitted from the write pole **710** to be canted to an angle toward the trailing shield **709** thereby increasing write field gradient. During a transition, when the direction of current flow through the second coil **716** changes, the capacitor will be negatively charged and will allow, and even assist current flow through the second coil **716.**

Once the capacitor **722** has been positively charged there will be no current flow through the coil **716.** In this way, the capacitor **722** advantageously deactivates the second coil **716** during the steady state process of writing a long magnetic section on the media. As discussed previously, deactivating the second coil during recording of a long magnetic section advantageously maximizes field strength by deactivating, or reducing the affect of, the trailing shield **709.** This maximization of write field comes at the expense of field gradient, but such a reduction in field gradient is not a problem when writing a long magnetic transition.

With reference now to Fig. **8,** in another embodiment of the invention, a magnetic write head **802** includes a magnetic yoke **804.** The yoke **804** includes first and second magnetic return poles **806, 808** and a write pole **810,** all of which are magnetically connected at a back gap section **812.** The second return pole **808,** which may be a trailing pole, can be configured with a trailing magnetic shield **814** that extends from the second return pole **808** toward, but not to the write pole **810.**

A first MMF source **816** provides a magnetomotive force for inducing a magnetic flux between the write coil and the first return pole. The first MMF source **816** can be a coil such as a pancake coil or a helical coil, as described previously with respect to Figs. **6** and **7.** A second MMF source **818** is also provided for selectively supplying a magnetomotive force to induce a magnetic flux between the write pole **810** and the second return pole **808,** thereby selectively activating the trailing shield **814** in the process.

According to the presently described embodiment, the second MMF source **818** can include multiple coils, such as first and second coils **820, 822.** The coils **820, 822** can be pancake or helical coils as described above, a portion of which can pass between the write pole **810** and the return pole **808.**

Both the first and second MMF sources **816, 818** can be driven by a common driver **824.** This driver **824** is connected with the first MMF source by electrically conductive leads **826, 828** and can be connected to the first coil **820** of the second MMF source **818,** by leads **830, 832.** The coils **816, 820** are connected to the diver such that a current from the driver **824** causes the coils **816, 820** to both induce a flux in the same direction in the write pole **810.** In other words, as can be seen in Fig. **8,** the lead **828** connected with the inner portion of the first MMF source **816** can be connected with the lead **832** connected with the outer portion of the coil **820.** This allows the magnetic fields from the coils **816, 820** to operate in opposite directions (ie. clockwise and counterclockwise) and to have additive effects on the magnetic flux delivered to the write pole **810.**

With reference still to Fig. **8**, the second coil **822** of the second MMF source is connected with the driver **824** by leads **834, 836.** The circuitry connecting the second coil **822** with the driver **824** includes an inductor or inductively functioning circuitry **838,** which is preferably connected in series with the driver **824** through one of the leads **834, 836.** As can be seen, the leads **834, 836** of the second coil **822** and leads **830, 832** of the first coil **820** are connected with the driver **824** in such a manner that the driver **824** sends current in opposite directions through the coils **820, 822.** For example, the inner turn of the coil first coil **820** can be connected to the same driver output as the outer output as the outer turn of the second coil **822,** and the outer turns of the first coil **820** can be connected with the same driver output as the inner turns of the second coil **822.**

As can be seen, when the current flows through both of the coils **820, 822** of the second MMF source **818** it does so in a manner that the current flows in opposite directions through the coils **820, 822.** Therefore, the magnetic fields from the coils cancel one another out. The inductor **838** acts to momentarily prevent switching of the current flowing through the second coil **818** of the second MMF source **818** when the direction of current (or voltage) from the driver is switched. This is similar to the delay circuit **622** described with reference to Fig. **6.** In this way, the inductor **838** causes the coils **820, 822** to act in an additive manner during a magnetic transition. In a steady state, when recording a long magnetic section on a media the inductor acts as closed circuit allowing the current to flow through the second coil **818** in a direction opposite to the coil **820.** Therefore, the magnetomotive force from the coils **820, 822** are additive to one another during a transition and cancel one another out during a steady state between transitions. This advantageously allows the trailing shield **814** to be activated during transitions, maximizing field gradient during transition, while allowing the trailing shield **814** to be de-activated during the recording of a long magnetic section, where field gradient is less important and strong field is needed.

While the invention has been described above with reference to specific embodiments, such as a perpendicular write head having leading and trailing return poles and a trailing shield, these have been presented by way of example in order to illustrate the invention. It should be understood that the invention applies more broadly to a magnetic write head having multiple magnetomotive force sources (MMF sources) that can be operated independently of one another. By "independently" it is meant that they do not have to operate in unison, even though they may operate in some predetermined relationship relative to on another. Such independent MMF sources can be used, for example, to direct magnetic flux as desired through a magnetic head based on operating conditions as described above. In addition, such multiple MMF sources could be used to alter the amount of flux in the write head or amount of write field emitted by the write head. Other uses and functions for multiple, independent MMF sources are possible as well.

The use of the above described embodiments have been discussed in some detail with regard to increasing field gradient at transitions and increasing write field away from transitions. However, the present invention can provide other important advantages as well. For example, the invention can be used to reduce undershoot in areas away from a magnetic transition. In addition, the multiple MMF sources can be used to adjust for manufacturing tolerances. For example, as discussed above, certain dimensions of a trailing shield are important to the proper operation of the trailing shield. Such dimensions include the throat height (thickness as measured away from the ABS), and the trailing shield gap (distance between the write pole and the trailing shield). If, for example, the trailing shield has too short of a throat height, it may saturate and not allow sufficient write field canting when writing a magnetic transition. Similarly, if the trailing shield gap is too great, there will also be insufficient write field canting. On the other hand, if the trailing shield throat height or gap is too small, an unacceptable amount of write field can be lost to the trailing shield, resulting in a reduction in write field strength. A multiple MMF write head according to the present invention can adjust for variances in these dimensions by increasing or decreasing the amount of flux that flows through the trailing shield as desired.

While various embodiments have been described above, it should be understood that they have been presented by way of example only, and not limitation. Other embodiments falling within the scope of the invention may also become apparent to those skilled in the art. Thus, the breadth and scope of the invention should not be limited by any of the above-described exemplary embodiments, but should be defined only in accordance with the following claims and their equivalents.

## Claims

1. A structure for perpendicular magnetic data recording, comprising:
a magnetic write pole;
a first magnetic return pole;
a second magnetic return pole opposite the first magnetic return pole the first and second return poles and write pole being magnetically connected in a back gap region opposite an air bearing surface (ABS);
a first magnetomotive force source (first MMF source) arranged for inducing a magnetic flux through the write pole and the first return pole; and
a second magnetomotive force source (first MMF source) arranged for inducing a magnetic flux through the write pole and the second return pole; and wherein
the amount of magnetomotive force generated by the second MMF source is variable relative to the first MMF source to control the relative amounts of magnetic flux flowing through the first and second return poles.

2. A structure as in claim 1 wherein the first MMF source comprises an electrically conductive coil at least a portion of which passes between the first return pole and the write pole, and the second MMF source comprises an electrically conductive coil at least a portion of which passes between the second return pole and the write pole.

3. A structure as in claim 1 wherein the first MMF source comprises a first electrically conductive coil at least a portion of which passes between the first return pole and the write pole, and the second MMF source comprises second and third electrically conductive coils at least a portion of which pass between the second return pole and the write pole.

4. A structure as in claim 3 wherein the second and third electrically conductive write coils are configured to provide opposite magnetomotive forces when operated in a steady state.

5. A structure as in claim 3 wherein the second and third electrically conductive write coils are configured to provide additive magnetomotive forces when operated in a transition.

6. A structure as in claim 1 further comprising a magnetic shield, magnetically connected with the second return pole at a location near the ABS, and extending toward, but not to the write pole.

7. A structure for perpendicular magnetic recording, comprising:
a magnetic write pole having an end disposed toward an air bearing surface (ABS);
a leading magnetic return pole having an end disposed toward the ABS, the leading return pole being magnetically connected with the write pole at a location away from the ABS;
a trailing return pole having an end disposed toward the ABS, the trailing return pole being magnetically connected with the write pole at a location away from the ABS;
a trailing magnetic shield magnetically connected with the trailing return pole at the end disposed toward the ABS, the trailing magnetic shield extending toward, but not to the write pole;
a first electrically conductive write coil, a portion of the first electrically conductive write coil passing between the leading return pole and the write pole;
a second electrically conductive write coil, a portion of the second electrically conductive write coil passing between the trailing return pole and the write pole; and
circuitry connected with the first and second coils for providing a magnetic current to the first and second coils, the circuitry being operative to control the amount of current to the first and second coils such that the amount of current delivered to the second coil relative to that delivered to the first coil can be varied.

8. A structure as in claim 7 wherein the circuitry is functional to increase the amount of current to the second coil when the write head is writing a magnetic transition and decrease the relative amount of current to the second coil when the write head is writing a long magnetic section.

9. A structure head as in claim 7 wherein the circuit includes an inductor.

10. A structure as in claim 7 wherein the circuit includes an inductor electrically connected with the second coil.

11. A structure for perpendicular magnetic recording, comprising:
a magnetic write pole having an end disposed toward an air bearing surface (ABS);
a magnetic write pole having an end extending toward an air bearing surface;
a first magnetic return pole, magnetically connected with the write pole at a location away from the ABS;
a second magnetic return pole, magnetically connected with the write pole at a location away from the ABS;
a first electrically conductive write coil, a portion of which passes between the first magnetic return pole and the write pole;
a second electrically conductive write coil, a portion of which passes between the first magnetic return pole and the write pole;
a third electrically conductive write coil a portion of which passes between the second magnetic return pole and the magnetic write pole; and
circuitry connected the first second and third coils to provide a write current to the first second and third coils such that the first coil provides a first magnetomotive force (first MMF) to induce a flux in the first return pole and the write pole and the second and third coils can provide a second magnetomotive force (second MMF) to the second return pole and the write pole, the circuitry being functional to vary the relative amounts of of the first and second MMFs.

12. A structure as in claim 11 wherein the circuitry includes a delay circuit connected with the third coil.

13. A structure as in claim 11 wherein the second and third coils are wound in opposite directions and wherein third coil is connected with a delay circuit.

14. A structure as in claim 11 wherein the first coil is configured to provide a MMF in a first direction in a steady state, the second coil is configured to provide a MMF iri a second direction in a steady state and the third coil is configured to provide a MMF in the first direction in a steady state and is connected with a delay circuit.

15. A structure as in claim 11 wherein the first coil is configured to provide a MMF in a first direction in a steady state, the second coil is configured to provide a MMF in a second direction in a steady state and the third coil is configured to provide a MMF in the first direction in a steady state and is connected with an inductive circuit.

16. A structure as in claim 7 wherein the circuitry in includes a capacitive circuit connected with the second coil.

17. A structure for perpendicular magnetic recording, comprising:
a magnetic write pole;
a first magnetic return pole, magnetically connected with the write pole;
a second magnetic return pole, magnetically connected with the write pole; and
circuitry for inducing a magnetic flux between the first return pole and the write pole and between the second return pole and the write pole, the circuitry being functional to vary the amount of flux to second return pole relative to that delivered to the first return pole.

18. A structure for perpendicular magnetic recording, comprising:
a magnetic write pole;
a first magnetic return pole, magnetically connected with the write pole;
a second magnetic return pole, magnetically connected with the write pole;
a first magnetomotive force source (first MMF) for providing a magnetomotive force to the first return pole and the second return pole;
a second magnetomotive force source (second MMF) for providing a magnetomotive force to the second return pole and the write pole; and
circuitry connected with the first and second MMF sources for controlling the relative amounts of magnetomotive force provided by the first and second MMF sources.

19. A structure as in claim 11 further comprising a magnetic trailing shield, magnetically connected with the second return pole and extending toward by not to the write pole, and wherein the circuitry a write field gradient by varying the amount of magnetic flux flowing through the trailing shield.

20. A structure as in claim 7 wherein the circuitry is functional to control the amount of current to the second coil relative to that to the first coil as necessary to compensate for structural dimension variations caused by manufacturing tolerances.

21. A structure for magnetic data recording, comprising:
a magnetic write pole;
a first magnetomotive force source (first MMF source);
a second magnetomotive force source (second MMF source); and
circuitry for operating the first and second MMF sources independently of one another.

22. A structure for magnetic data recording, comprising:
a magnetic write pole;
a first magnetomotive force source (first MMF source);
a second magnetomotive force source (second MMF source); and
circuitry for operating the first and second MMF sources independent, mutually cooperating manner with respect to one another.
